# EUROPÄISCHE PATENTANMELDUNG

(11) **EP 1 772 762 A1**
(43) Veröffentlichungstag der Anmeldung: **11.04.2007**
(21) Anmeldenummer: 06121130.6
(22) Anmeldetag: 22.09.2006
(51) Int. Cl.: G02B 21/00

(54) **Scanmikroskop und Scanverfahren mit einem Scanmikroskop**

(30) Priorität: 06.10.2005 DE 102005047884
(71) Anmelder: Leica Microsystems CMS GmbH, 35578 Wetzlar (DE)
(72) Erfinder: Widzgowski, Bernd, 69221, Dossenheim (DE)
(74) Vertreter: Stamer, Harald

(57) **Zusammenfassung**

Es ist ein Scanmikroskop (1) und ein Scanverfahren offenbart. Das Scanmikroskop (1) hat im Beleuchtungslichtstrahl (3) ein Auskoppelelement (60) angeordnet, das zumindest einen Bruchteil des Beleuchtungslichtstrahls (3) auskoppelt und auf einen Detektor (61) lenkt, der die Pulsfrequenz der Lichtquelle ermittelt, die den Beleuchtungslichtstrahl (3) erzeugt, und diese Pulsfrequenz als Grundtackt für den Scanner dient.

## Beschreibung

Die Erfindung betrifft ein Scanmikroskop. Im Besonderen betrifft die Erfindung ein Scanmikroskop mit einer Lichtquelle, die einen gepulsten Beleuchtungslichtstrahl aussendet, einer Scaneinrichtung, die den Beleuchtungslichtstrahl durch eine Scanoptik und eine Mikroskopoptik hindurch über bzw. durch ein Objekt führt, einer Detektoreinheit, die das vom Objekt ausgehende Licht empfängt und Detektionssignale erzeugt.

Die zu untersuchende Probe wird durch einen Laserstrahl mit Hilfe von Spiegelgalvanometern punktweise abgetastet. Das von der Probe emittierte Lumineszenz- bzw. Fluoreszenzlicht wird einem Detektor zugeführt, der ein zur Lichtleistung proportionales elektrisches Signal ausgibt.

Für manche Anwendungen, z.B. bei der Multiphotonen-Anregung, ist es notwendig, einen Laser als Lichtquelle zu verwenden, der Licht in Form kurzer Pulse abgibt. Einige dieser Laser sind bauartbedingt auf eine externe Taktquelle synchronisierbar, wie z.B. Diodenlaser, andere sind nicht synchronisierbar, wie z.B. Faserlaser oder TiSa-Laser.

Problematisch ist, dass die Scaneinrichtung und die gepulste Lichtquelle unabhängig voneinander betrieben werden.

Ferner betrifft die Erfindung ein Scanverfahren mit einem Scanmikroskop.

Die deutsche Offenlegungsschrift DE 101 26 286 A1 offenbart ein Verfahren und eine Vorrichtung zum punktweisen Scannen einer Probe. Das Verfahren ist gekennzeichnet durch die Schritte des Erzeugens eines Sollsignals für jeden Scanpunkt, und des Übergebens des Sollsignals an eine Scaneinrichtung. In weiteren Schritten erfolgt das Ermitteln eines Istsignals für jeden Scanpunkt aus der Stellung der Scaneinrichtung. Ferner erfolgt das Detektieren mindestens eines Detektionssignals für jeden Scanpunkt, das Errechnen eines Darstellsignals und einer Bildpunktposition aus dem Istsignal und/oder dem Sollsignal und dem Detektionssignal, und das Zuordnen des Darstellsignals zu der Bildpunktposition.

Die deutsche Offenlegungsschrift DE 197 02 752 A1 bezieht sich auf ein Ansteuersystem für einen Scanner, insbesondere für ein Laserscanmikroskop, mit einem Schwingmotor zum Antreiben eines Schwingspiegels, der zur linear oszillierenden Ablenkung eines Strahlenbündels dient. Es ist eine Ansteuereinheit zur Speisung des Schwingmotors mit einem Erregerstrom vorgesehen, der hinsichtlich der Ansteuerfrequenz, der Frequenzkurve und der Amplitude veränderbar ist. Die Ansteuerung erfolgt mit einem Funktionsgenerator, der mit der Ansteuereinheit verbunden ist, und mit einem Meßwertaufnehmer zur Gewinnung einer Folge von Informationen über die Ablenkpositionen des Schwingspiegels. Der Meßwertaufnehmer ist über eine Logikeinheit zur Ermittlung von Korrekturwerten für den Erregerstrom mit dem Funktionsgenerator verknüpft. Damit ist es möglich, unter Auswertung der vom Meßwertaufnehmer zur Verfügung gestellten Informationen über die tatsächliche Ablenkposition des Schwingspiegels mit Hilfe der Logikeinheit Korrekturwerte zu ermitteln. Diese können wiederum dazu genutzt werden, die vom Funktionsgenerator ausgegebenen Ansteuerfrequenzen so zu beeinflussen, dass die Abweichungen minimiert bzw. vollkommen vermieden werden.

Die europäische Patentanmeldung EP 0 845 693 A1 offenbart ein konfokales Mikroskop und ein Verfahren zum Generieren dreidimensionaler Bilder unter Verwendung dieses Mikroskops. Die zu untersuchende Probe wird 2-dimensional abgescannt. Zur Erzeugung von 3-dimensionalen Bildern werden die Objektauflage und das Objekt relativ zueinander bewegt.

Die Pulsfrequenz der nicht synchronisierbaren Laser, die für die Bildaufnahme insbesondere bei der Multiphotonenanregung interessant sind, liegt vorzugsweise im Bereich von 80MHz bis 90MHz. Die Abtastfrequenz des Scansystems kann in einem Intervall von 40MHz bis 45MHz liegen.

Die Pulsfrequenz des Lasers kann aber auch über 100 MHz, und die Abtastfrequenz des Scansystems deutlich weniger als 40 MHz betragen.

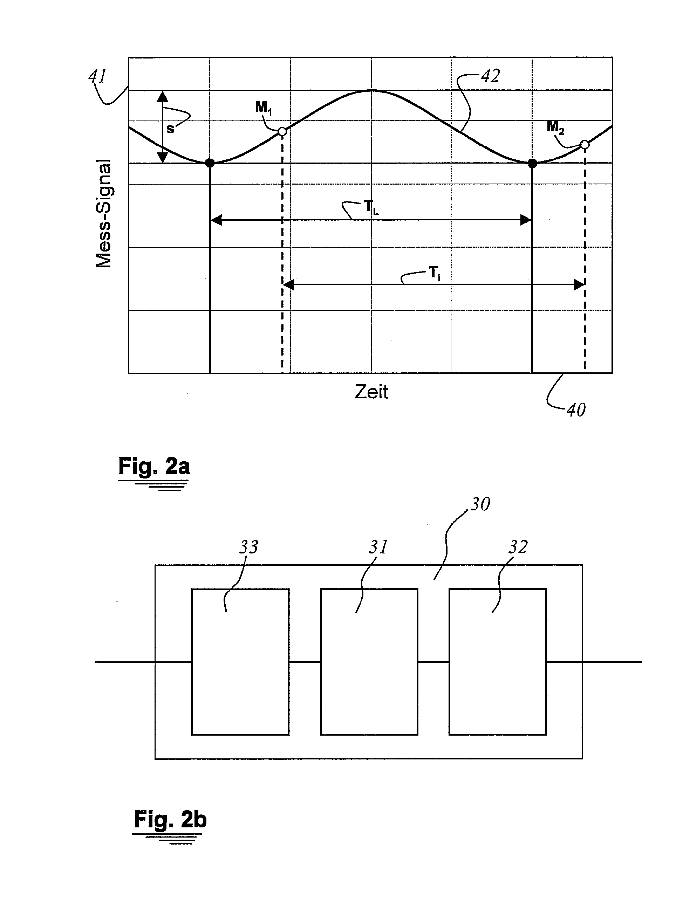

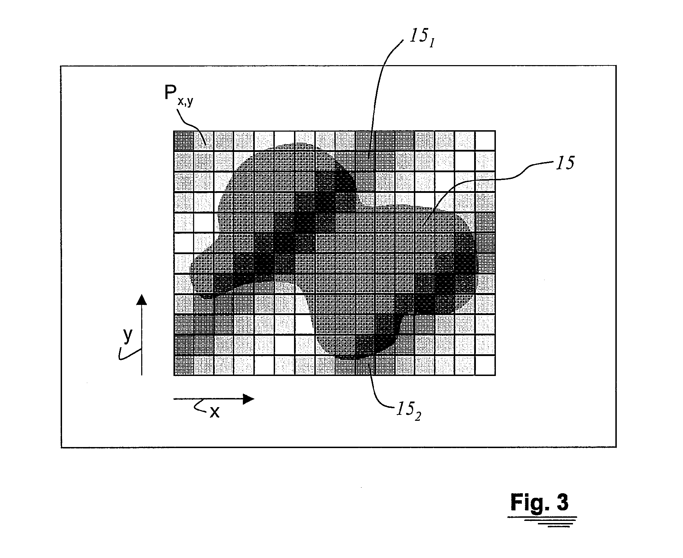

Betrachtet man die Eingangsschaltung des Detektionssystems bis zum A/D-Wandler, so weist diese ein Tiefpassverhalten auf. Werden nun Lichtpulse mit einer Zeitkonstanten T_{L} detektiert, steigt das Signal am Ende des Tiefpasses erst an, um dann wieder abzufallen (siehe Fig. 2a). Je nachdem zu welchem Zeitpunkt der A/D-Wandler den Spannungswert mit der Zeitkonstanten Tᵢ an seinem Eingang umsetzt, erhält er trotz gleicher Pulsformen und Pulshöhen ein anderes Messergebnis. Diese Fehler überlagern sich dem eigentlichen Signal der Bildhelligkeit der Probe und machen sich durch ein streifiges Muster im Bild bemerkbar (siehe Fig. 3). Da diese Artefakte eine gewisse Regelmässigkeit aufweisen, fallen sie beim Betrachter als Jitter der Helligkeit der zu untersuchenden Strukturen besonders stark auf.

Weiterhin wird durch das stroboskopartige Beleuchten der Probe oder des Objekts nur die Helligkeitsinformation an einem bestimmten Ort der Probe dem Detektor zugeführt. Das Schwanken dieses Betrachtungszeitpunktes relativ zum Abtastzeitpunkt des A/D-Wandlers bewirkt ein scheinbares Wandern von Strukturen in dem Bereich der Bewegung des Abtastpunktes zwischen zwei Abtastungen des A/D-Wandlers. Der Betrachter nimmt also einen Jitter des Ortes der zu untersuchenden Struktur wahr.

Der Erfindung liegt die Aufgabe zugrunde, ein Scanmikroskop zu schaffen, mit dem die Bildqualität verbessert ist, wobei systembedingte Artefakte vermieden werden.

Die Aufgabe wird gelöst durch ein Scanmikroskop, das die Merkmale des Anspruchs 1 umfasst.

Der Erfindung liegt die Aufgabe zugrunde, ein Verfahren zu schaffen, das ein Scanmikroskop verwendet, wobei durch das Verfahren die Bildqualität verbessert ist, und systembedingte Artefakte vermieden werden.

Die Aufgabe wird gelöst durch ein Verfahren, das die Merkmale des Anspruchs 13 umfasst.

Erfindungsgemäß ist im Beleuchtungslichtstrahlengang ein Auskoppelelement angeordnet, das zumindest einen Bruchteil des Beleuchtungslichtstrahls auskoppelt und auf einen Detektor lenkt, wobei durch Auswerteelektronik die Pulse der Lichtquelle ermittelt werden, die den Beleuchtungslichtstrahl erzeugt.

Eine digitale Schaltung ist der Detektoreinheit nachgeschaltet, die mit Hilfe eines Komparators mit einstellbarer Schaltschwelle das detektierte Pulssignal der Lichtquelle aufbereitet, und der Scaneinrichtung als Referenztakt zuführt.

In einer weiteren Ausgestaltung der Erfindung ist zwischen dem Detektor und der Steuerelektronik ein Frequenzteiler vorgesehen, der die Pulsfrequenz des Lasers an den möglichen Eingangsfrequenzbereich der Scaneinrichtung angepasst. Die Taktfrequenz der Scaneinrichtung ist dabei an die Pulsfrequenz der Lichtquelle anpassbar.

Vorteilhafte Ausgestaltungen der Erfindung können den Unteransprüchen entnommen werden.

In der Zeichnung ist der Erfindungsgegenstand schematisch dargestellt, und wird anhand der Figuren nachfolgend beschrieben. Dabei zeigen:
Fig. 1 eine schematische Darstellung eines Scanmikroskops, das eine Scaneinrichtung umfasst, mit der das Objekt abgescannt wird;
Fig. 2a eine graphische Darstellung der Signalabtastung bei Pulsbetrieb, die Analog/Digital-Wandlung in der Detektoreinheit (19) ein Tiefpassverhalten zeigt;
Fig. 2b den Aufbau der digitalen Schaltung;
Fig. 3 eine graphische Darstellung der Entstehung von Mustern, die auch wandern können, durch die Überlagerung des Fehlersignals;
Fig. 4 eine graphische Darstellung der Entstehung eines Messfehlers über dem Ort bei Änderung der Emissionseigenschaften der Probe oder des Objekts; und
Fig.5 eine schematische Darstellung eines Scanmikroskops, das eine Scaneinrichtung umfasst, mit der das Objekt abgescannt wird, wobei die Synchronisierung zwischen Puls- und Abtastfrequenz erreicht ist.

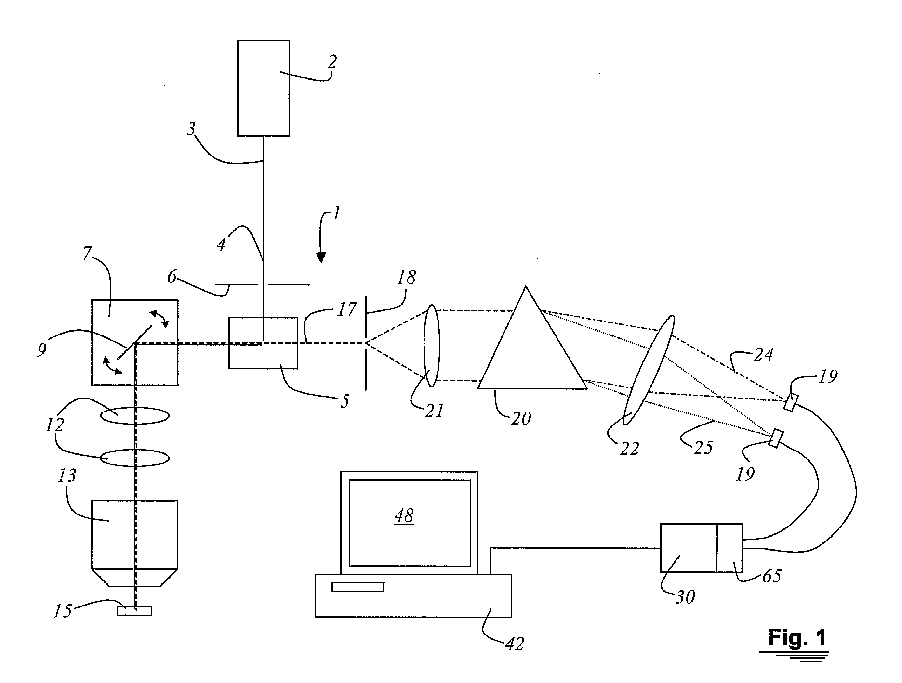

In Fig. 1 zeigt den schematischen Aufbau eines konfokalen Scanmikroskops 1, in dem die erfindungsgemäße Vorrichtung implementiert werden kann. Das Scanmikroskop 1 umfasst eine Detektoreinheit 19, die in unterschiedlichen Ausführungsformen ausgebildet sein kann. Der von mindestens einem Beleuchtungssystem 2 kommende Beleuchtungslichtstrahl 3 wird von einem Strahlteiler oder einem geeigneten Umlenkmittel 5 zu einer Scaneinrichtung 7 geleitet. Für manche Experimente ist es notwendig, einen Laser als Lichtquelle im Beleuchtungssystem 2 zu verwenden. Der Laser kann dabei vorzugsweise Licht in Form kurzer Pulse abgeben. Bevor der Beleuchtungslichtstrahl 3 auf das Umlenkmittel 5 trifft, passiert dieser ein Beleuchtungspinhole 6. Die Scaneinrichtung 7 umfasst mindestens einen Scanspiegel 9, der den Beleuchtungslichtstrahl 3 durch eine Scanoptik 12 und eine Mikroskopoptik 13 hindurch über bzw. durch ein Objekt 15 führt. Der Scanspiegel 9 kann über einen Motor (nicht dargestellt) angetrieben werden, wobei zusätzlich ein Torsionsstab vorgesehnen sein kann, über den der Scanspiegel 9 auch als resonanter Scanspiegel 9 betreibbar ist. Der Beleuchtungslichtstrahl 3 wird bei nicht transparenten Objekten 15 über die Objektoberfläche geführt. Bei biologischen Objekten 15 (Präparaten) oder transparenten Objekten kann der Beleuchtungslichtstrahl 3 auch durch das Objekt 15 geführt werden. Zu diesen Zwecken werden nichtleuchtende Präparate ggf. mit einem geeigneten Farbstoff präpariert (nicht dargestellt, da etablierter Stand der Technik). Die in dem Objekt 15 vorhandenen Farbstoffe werden durch den Beleuchtungslichtstrahl 3 z.B. zur Fluoreszenz angeregt, und senden Licht in einem ihnen eigenen charakteristischen Bereich des Spektrums aus. Dieses vom Objekt 15 ausgehende Lumineszenz- oder Fluoreszenzlicht definiert einen Detektionslichtstrahl 17. Dieser gelangt durch die Mikroskopoptik 13, die Scanoptik 12, und über das Scanmodul 7 zum Umlenkmittel 5, passiert dieses, und gelangt über ein Detektionspinhole 18 auf die Detektoreinheit 19. Die Detektoreinheit 19 kann aus mindestens einem Photomultiplier bestehen. Ebenso ist es denkbar, dass die Detektoreinheit 19 aus einem Photomultiplier-Array, einem CCD-Chip, einem EMCCD-Chip oder einem APD-Array besteht. Der vom Objekt 15 ausgehende bzw. definierte Detektionslichtstrahl 17 ist in Fig. 1 als gestrichelte Linie dargestellt. In der Detektoreinheit 19 werden elektrische, zur Leistung des vom Objekt 15 ausgehenden Lichtes, proportionale Detektionssignale erzeugt. Da, wie bereits oben erwähnt, vom Objekt 15 Licht nicht nur einer Wellenlänge ausgesandt wird, ist es sinnvoll vor der Detektoreinheit 19 ein dispersives Element 20 vorzusehen. Das dispersive Element 20 spaltet den Detektionslichtstrahl spektral auf, so dass die einzelnen Wellenlängen des Detektionslichts räumlich spektral getrennt sind. Dem dispersiven Element 20 ist ein Linse 21 vorgeschaltet, die den Detektionslichtstrahl 17 aufweitet und parallel macht. Dem dispersiven Element 20 ist eine weitere Linse 22 nachgeschaltet, die die spektral getrennten Strahlen 24, 25 des Detektionslichtstrahls 17 auf die Detektoreinheit 19 fokussiert. Die spektral getrennten Strahlen 24, 25 unterscheiden sich hinsichtlich der Wellenlänge und treffen somit auf unterschiedliche Detektorelemente, z.B. Photomultiplier, oder wenn die Detektoreinheit 19 als Chip ausgeformt ist, auf unterschiedliche Bereiche des Chips. Die von der Detektoreinheit 19 gelieferten Signale werden an eine digitale Schaltung 30 geleitet, in der die Sammlung der Detektorsiganle stattfindet. Die digitale Schaltung 30 kann ferner mit einem Rechner 42 verbunden sein, dem ein Display 48 zugeordnet ist, auf dem z.B. Bilddaten dargestellt werden können.

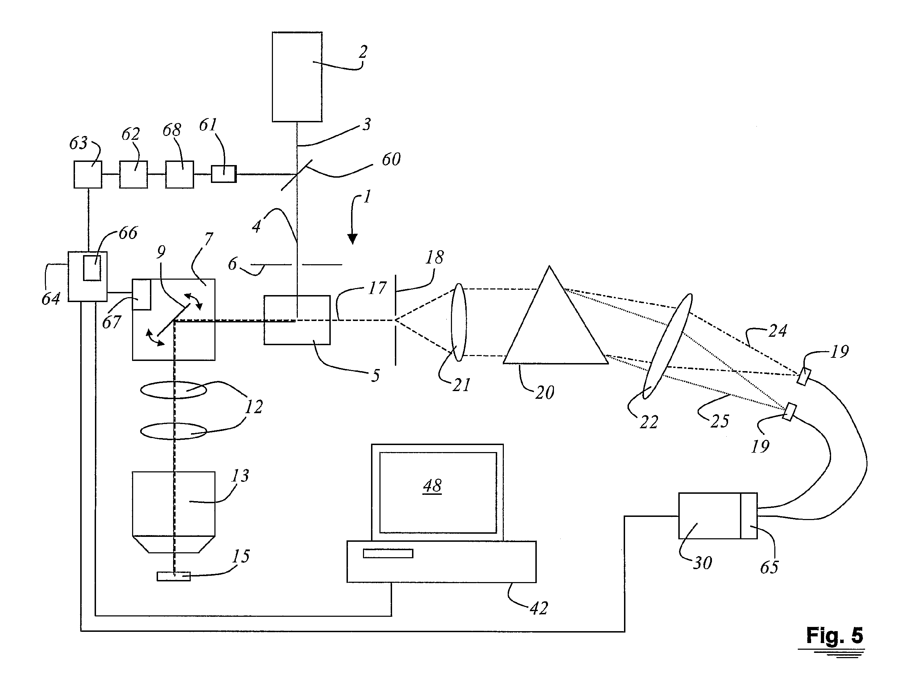

Wie in Fig. 5 dargestellt, werden die Laserpulse des Beleuchtungssystem 2 mit Hilfe eines photosensitiven Elements, z.B. einer Photodiode, abgegriffen, und diese Pulskette wenn nötig durch einen Frequenzteiler an den möglichen Eingangsfrequenzbereich des Scanners angepasst. Der Scanner verfügt über ein Vorkehrung, um dieses Taktsignal als Basistakt auswählen zu können. Wenn kein externes Taktsignal anliegt, muss dies detektierbar sein, damit auf eine scannerinterne Taktquelle umgeschaltet werden kann.

Um den vom Laser ausgesandten Lichtpuls optimal ausnutzen zu können, wird noch eine Vorrichtung zur Beeinflussung der Phase des in den Scanner eingespeisten Taktes vorgesehen.

Fig. 2a zeigt eine graphische Darstellung der Signalabtastung bei Pulsbetrieb des Beleuchtungssystems 2. Die Analog/Digital-Wandlung der Signale der Detektoreinheit 19 zeigt ein Tiefpassverhalten. Auf der Abszisse 40 ist die Zeit, und auf der Ordinate 41 das Messsignal aufgetragen. Mit dem Doppelpfeil s ist die Höhe des Signals der Lichtpulse bezeichnet. Die einzelnen Lichtpulse werden mit der Zeitkonstanten T_{L} detektiert. Das Signal 42 steigt aufgrund des Tiefpassverhaltens der Schaltung zunächst an, um dann wieder abzufallen. Die Integration der Signale von der Detektoreinheit 19 wird in der digitalen Schaltung 30 durchgeführt. Die digitale Schaltung 30 ist der Detektoreinheit 19 nachgeschaltet (siehe Fig. 1), die die Detektionssignale innerhalb eines Pixels P_{x,y} periodisch abfragt und daraus z.B. einen Mittelwert bildet.

Fig. 2b zeigt den Aufbau der digitalen Schaltung 30. Die digitale Schaltung 30 enthält einen Summierer 31, der die mehreren periodischen Detektionssignale innerhalb eines Pixels P_{x,y} aufsummiert (siehe Fig. 3). Die digitale Schaltung 30 enthält ferner einen Dividierer 32, der die Summe der mehreren Detektionssignale durch eine Anzahl der Detektionssignale, die innerhalb des jeweiligen Pixels P_{x,y} aufsummiert wurden, teilt. In einer weiteren Ausführungsform der Erfindung ist dem Summierer 31 und dem Dividierer 32 in der digitalen Schaltung 30 ein Multiplizierer 33 vorgeschaltet. Durch eine digitale Multiplikation (vor dem Summierer 31 und folgenden Dividierer 32) kann eine Signalverstärkung erreicht werden, wodurch sich die numerische Genauigkeit erhöht. Durch die digitale Integration ist der Ausgangswert der Detektoreinheit 19, und damit die Bildhelligkeit unabhängig von der Scangeschwindigkeit und dem Scanformat. Durch die Mittelwertbildung wird ferner das Rauschen der Ausgangsdaten verringert, und es werden auch Digitalisierungsfehler ("Ausreißer") minimiert. Aufgrund der Digitalisierung sind störende Effekte, wie z.B. Parameterdrift der analogen Komponenten (durch Temperatur, Alterung, Bauteiltoleranzen) verringert bzw. ausgeschlossen.

Mit Tᵢ ist der Zeitpunkt bzw. die Zeitkonstante bezeichnet, zu der der A/D-Wandler den Spannungswert von der Detektoreinheit 19 an seinem Eingang umsetzt. Wie in Fig. 2a dargestellt, erhält man trotz gleicher Pulsformen und Pulshöhen jeweils ein anderes Messergebnis M₁ oder M₂.

Diese Fehler überlagern sich dem eigentlichen Signal der Bildhelligkeit der Probe oder des Objekts 15, und machen sich durch ein streifiges Muster im Bild bemerkbar, das auf dem Display 48 dargestellt wird. Fig. 3 zeigt eine graphische Darstellung der Entstehung von Mustern 15₁, 15₂, die auch wandern können, durch die Überlagerung des Fehlersignals. Aufgrund des Tiefpassverhaltens der digitalen Schaltung 30 ergibt sich nach Detektieren der Laserpulse mit der Zeitkonstanten T_{L} die Schwankungsbreite s der Digitalisierungsergebnisse durch unterschiedliche Abtastzeitpunkte im Intervall Tᵢ (siehe Fig. 2a)

Da diese Artefakte eine gewisse Regelmäßigkeit aufweisen, fallen sie dem Betrachter besonders stark als Jitter der Helligkeit der zu untersuchenden Strukturen auf.

Weiterhin wird durch das stroboskopartige Beleuchten der Probe 15 nur die Helligkeitsinformation an einem bestimmten Ort der Probe 15 der Detektoreinheit 19 zugeführt. Das Schwanken dieses Betrachtungszeitpunktes relativ zum Abtastzeitpunkt des A/D-Wandlers bewirkt ein scheinbares Wandern von Strukturen in dem Bereich der Bewegung des Abtastpunktes zwischen zwei Abtastungen des A/D-Wandlers, d.h. es ergibt sich auch ein entsprechender Jitter des Ortes der zu untersuchenden Strukturen.

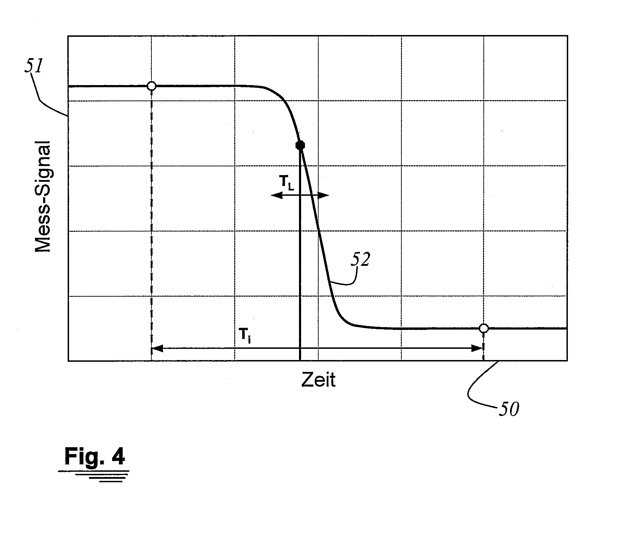

Fig. 4 zeigt eine graphische Darstellung der Entstehung eines Messfehlers über dem Ort bei Änderung der Emissionseigenschaften der Probe oder des Objekts 15. Auf der Abszisse 50 ist die Zeit, und auf der Ordinate 51 das Messsignal 52 aufgetragen. Das Messsignal 52 zeigt z.B. einen Helligkeitssprung (von hell nach dunkel), der durch das Emissionsverhalten der Probe 15 abhängig vom Ort verursacht sein kann. Je nachdem wann der Laserpuls im Intervall T_{L} auftritt, wird im Abtastintervall Tᵢ des A/D-Wandlers 65 eine hohe, oder eine niedrige Intensität detektiert.

Fig. 5 zeigt eine schematische Darstellung eines Scanmikroskops 1, das eine Scaneinrichtung 7 umfasst, mit der das Objekt 15 abgescannt wird, wobei die Synchronisierung zwischen Puls- und Abtastfrequenz erreicht ist. Die Scaneinrichtung 7 weist einen Grundtakt auf, der sich aus dem Takt des Lasers abgeleitet. Die Frequenzen der Scaneinrichtung 7 und des Beleuchtungssystems 2 bzw. des verwendeten Lasers sind damit synchronisiert.

Hierzu ist im Beleuchtungslichtstrahl 3 ein Auskoppelelement 60 angeordnet, das zumindest einen Bruchteil des Beleuchtungslichtstrahls 3 auskoppelt, und auf einen Detektor 61 lenkt. Über den Detektor 61 wird die Pulsfrequenz der Lichtquelle ermittelt, die den Beleuchtungslichtstrahl 3 erzeugt. Das Auskoppelelement 60 kann z.B. ein Strahlteiler, und der Detektor 61 ein photosensitives Element, z.B. eine Photodiode, sein. Die digitale Schaltung 30 ist der Detektoreinheit 19 nachgeschaltet. Die digitale Schaltung 30 umfasst auch einen A/D-Wandler 65 für die Signale der Detektoreinheit 19.

Zusätzlich können die vom Detektor 61 ermittelten Pulsfrequenzen des Beleuchtungssystems 2 bzw. des verwendeten Lasers durch einen Frequenzteiler 63 an den möglichen Eingangsfrequenzbereich der Scaneinrichtung 7 angepasst werden. Dem Detektor 61 ist eine digitale Schaltung 68 nachgeschaltet, die die ermittelte Pulskette der Lichtquelle der Scaneinrichtung 7 als Taktsignal zuführt, und daraus den Basistakt ableitet. Die Steuerelektronik 64 umfasst eine Vorrichtung 66, mit der das Taktsignal des Lasers als Basistakt ausgewählt werden kann. Fehlt das Taktsignal des Lasers, kann dies durch die Vorrichtung 66 auch automatisch detektiert werden, so dass auf eine interne Taktquelle 67 der Scaneinrichtung 7 umgeschaltet wird.

Ferner kann zwischen dem Detektor 61 und dem Frequenzteiler 63 eine Verzögerungsschaltung 62 vorgesehen sein. Die Verzögerungsschaltung 62 beeinflusst die Phase des in die Scaneinrichtung 7 eingespeisten Taktes, damit der vom Laser emittierte Lichtpuls vollständig nutzbar ist.

Eine Steuerelektronik 64 für die Scaneinrichtung 7 erhält dabei sowohl das Detektionssignal der Detektionselektronik 30, als auch das Messsignal des Detektors 61. Mit Hilfe der digitalen Schaltung 68 und der Steuerelektronik 64 werden die beiden Signale synchronisiert. Über einen Rechner 42 kann dies gesteuert werden.

Der Detektor 61 zur Ermittlung der Pulse des Beleuchtungssystems 2 kann ein photosensitives Element, z.B. eine Photodiode, sein. Die Pulsfrequenz des Beleuchtungssystems 2 ist vorzugsweise etwa doppelt so hoch, wie die Taktfrequenz der Scaneinrichtung 7.

Die Pulsfrequenz der Laser liegt vorzugsweise im Bereich von 80MHz bis 90MHz, kann aber auch wesentlich höher sein. Die Abtastfrequenz der Scaneinrichtung 7 kann in einem Intervall von 40MHz bis 45MHz liegen, wobei die Standardfrequenz bei 40MHz liegt. Diese Frequenz kann aber auch wesentlich niedriger sein. Betrachtet man die Eingangsschaltung der digitalen Schaltung 30 bis zum A/D-Wandler 65 so weist diese ein Tiefpassverhalten auf. Mit der zusätzlichen Steuerelektronik erfolgt eine Synchronisierung der Scaneinrichtung 7 im Scanmikroskop 1. Die Probe oder das Objekt 15 werden mit einem gepulsten Laserstrahl bzw. Beleuchtungslichtstrahl 3 über eine Scaneinrichtung 7, die Spiegelgalvanometer umfasst, gescannt. Das von der Probe 15 emittierte Licht wird pixelweise mit Hilfe der Detektoreinheit 19 erfasst. Die Pulse des Lasers werden messtechnisch erfasst, und das Messsignal wird der Scaneinrichtung 7 als Referenzfrequenz zugeführt.

## Patentansprüche

1. Scanmikroskop mit einer Lichtquelle, die einen gepulsten Beleuchtungslichtstrahl (3) aussendet, einer Scaneinrichtung (7), die den Beleuchtungslichtstrahl (3) durch eine Mikroskopoptik (13) hindurch über bzw. durch ein Objekt (15) führt, einer Detektoreinheit (19), die das vom Objekt (15) ausgehende Licht empfängt und Detektionssignale erzeugt, **dadurch gekennzeichnet, dass** im Beleuchtungslichtstrahl (3) ein Auskoppelelement (60) angeordnet ist, das zumindest einen Bruchteil des Beleuchtungslichtstrahls (3) auskoppelt und auf einen Detektor (61) lenkt, der die Pulse der Lichtquelle detektiert, und das Pulssignal der Scaneinrichtung (7) zuführt.

2. Scanmikroskop nach Anspruch 1, **dadurch gekennzeichnet, dass** eine digitale Schaltung (30) der Detektoreinheit (19) nachgeschaltet ist, die auch einen A/D-Wandler (65) für die Signale von der Detektoreinheit (19) umfasst.

3. Scanmikroskop nach Anspruch 1, **dadurch gekennzeichnet, dass** dem Detektor (61) eine digitale Schaltung (68) nachgeschaltet ist, die die ermittelte Pulskette der Lichtquelle der Scaneinrichtung (7) als Taktsignal zuführt, und daraus den Basistakt ableitet.

4. Scanmikroskop nach einem der Ansprüche 1 bis 3, **dadurch gekennzeichnet, dass** die Lichtquelle ein Laser ist.

5. Scanmikroskop nach einem der Ansprüche 1 bis 4, **dadurch gekennzeichnet, dass** nach dem Detektor ein Frequenzteiler (63) vorgesehen ist, der die Taktfrequenz der Scaneinrichtung (7) an den möglichen Pulsfrequenzbereich des Lasers angepasst.

6. Scanmikroskop nach Anspruch 5, **dadurch gekennzeichnet, dass** die Steuerelektronik eine Vorrichtung (66) umfasst, mit der das Taktsignal des Lasers als Basistakt ausgewählt werden kann, und/oder ein Fehlen des Taktsignals des Lasers automatisch detektiert wird, so dass auf eine interne Taktquelle (67) der Scaneinrichtung (7) umgeschaltet werden kann.

7. Scanmikroskop nach einem der Ansprüche 1 bis 6, **dadurch gekennzeichnet, dass** zwischen dem Detektor (61) und dem Frequenzteiler (63) eine Verzögerungsschaltung (62) vorgesehen ist.

8. Scanmikroskop nach Anspruch 7, **dadurch gekennzeichnet, dass** die Verzögerungsschaltung (62) die Phase des in die Scaneinrichtung (7) eingespeisten Taktes beeinflusst, damit ein vom Laser emittierter Lichtpuls vollständig ausnutzbar ist.

9. Scanmikroskop nach einem der Ansprüche 1 bis 8, **dadurch gekennzeichnet, dass** der Detektor zur Ermittlung der Pulse der Lichtquelle ein photosensitives Element ist.

10. Scanmikroskop nach einem der Ansprüche 3 bis 9, **dadurch gekennzeichnet, dass** die digitale Schaltung (68) einen Komparator mit einstellbarer Schaltschwelle umfasst.

11. Scanmikroskop nach Anspruch 10, **dadurch gekennzeichnet, dass** die Pulsfrequenz der Lichtquelle im Bereich von 80 bis 90 MHz liegt.

12. Scanmikroskop nach Anspruch 10, **dadurch gekennzeichnet, dass** die Scaneinrichtung (7) eine Taktfrequenz im Bereich von 40 bis 45 MHz besitzt.

13. Scanverfahren mit einem Scanmikroskop, wobei das Scanmikroskop eine Lichtquelle umfasst, die einen gepulsten Beleuchtungslichtstrahl (3) aussendet, einer Scaneinrichtung (7), die den Beleuchtungslichtstrahl (3) durch eine Mikroskopoptik (13) hindurch über bzw. durch ein Objekt (15) führt, einer Detektoreinheit (19), mit der das vom Objekt (15) ausgehende Licht empfangen wird und Detektionssignale erzeugt werden, **gekennzeichnet durch** die folgenden Schritte, dass mit einem Auskoppelelement zumindest ein Bruchteil des Beleuchtungslichtstrahls (3) auf einen Detektor gelenkt wird, die Pulse der Lichtquelle detektiert werden, und das Pulssignal der Scaneinrichtung (7) zugeführt wird.

14. Verfahren nach Anspruch 13, **dadurch gekennzeichnet, dass** eine digitale Schaltung (68) dem Detektor (61) nachgeschaltet wird, die die detektierte Pulskette der Lichtquelle der Scaneinrichtung (7) als Taktsignal zuführt, und daraus den Basistakt ableitet.

15. Verfahren nach einem der Ansprüche 13 bis 15, **dadurch gekennzeichnet, dass** die Lichtquelle ein Laser ist.

16. Verfahren nach einem der Ansprüche 13 bis 16, **dadurch gekennzeichnet, dass** nach dem Detektor ein Frequenzteiler vorgesehen wird, durch den die Taktfrequenz der Scaneinrichtung (7) an den möglichen Pulsfrequenzbereich des Lasers angepasst wird.

17. Verfahren nach Anspruch 16, **dadurch gekennzeichnet, dass** die Steuerelektronik eine Vorrichtung umfasst, mit der das Taktsignal des Lasers als Basistakt ausgewählt werden kann, und/oder ein Fehlen des Taktsignals des Lasers automatisch detektiert wird, so dass auf eine interne Taktquelle der Scaneinrichtung (7) umgeschaltet wird.

18. Verfahren nach einem der Ansprüche 13 bis 17, **dadurch gekennzeichnet, dass** zwischen dem Detektor und dem Frequenzteiler eine Verzögerungsschaltung vorgesehen wird.

19. Verfahren nach Anspruch 18, **dadurch gekennzeichnet, dass** die Verzögerungsschaltung die Phase des in die Scaneinrichtung (7) eingespeisten Taktes beeinflusst, so dass ein vom Laser emittierter Lichtpuls vollständig ausgenutzt wird.

20. Verfahren nach einem der Ansprüche 13 bis 19, **dadurch gekennzeichnet, dass** die Pulse der Lichtquelle mit Hilfe eines photosensitiven Elements ermittelt werden.

21. Verfahren nach Anspruch 20, **dadurch gekennzeichnet, dass** die Pulsfrequenz der Lichtquelle im Bereich von 80 bis 90 MHz liegt.

22. Verfahren nach Anspruch 20, **dadurch gekennzeichnet, dass** die Scaneinrichtung (7) eine Taktfrequenz im Bereich von 40 bis 45 MHz besitzt.
